(19) Europäisches Patentamt
European Patent Office
Office européen des brevets

(11) **EP 4 183 257 A1**

(12) **EUROPÄISCHE PATENTANMELDUNG**

(43) Veröffentlichungstag:
    24.05.2023  Patentblatt 2023/21

(21) Anmeldenummer: 21209384.3

(22) Anmeldetag: **19.11.2021**

(51) Internationale Patentklassifikation (IPC):
    $A23F\ 3/16^{(2006.01)}$     $A23F\ 3/22^{(2006.01)}$
    $A23F\ 3/32^{(2006.01)}$     $A23F\ 5/12^{(2006.01)}$
    $A23F\ 5/28^{(2006.01)}$     $A23F\ 5/40^{(2006.01)}$
    $A23F\ 5/42^{(2006.01)}$     $A47J\ 31/36^{(2006.01)}$
    $B65D\ 85/804^{(2006.01)}$

(52) Gemeinsame Patentklassifikation (CPC):
    A23F 5/28; A23F 3/16; A23F 3/22; A23F 3/32;
    A23F 5/12; A23F 5/40; A23F 5/42; B65D 65/466;
    B65D 85/804

(84) Benannte Vertragsstaaten:
    AL AT BE BG CH CY CZ DE DK EE ES FI FR GB
    GR HR HU IE IS IT LI LT LU LV MC MK MT NL NO
    PL PT RO RS SE SI SK SM TR
    Benannte Erstreckungsstaaten:
    BA ME
    Benannte Validierungsstaaten:
    KH MA MD TN

(71) Anmelder: **Delica AG**
    **5033 Buchs AG (CH)**

(72) Erfinder:
    • **Siefarth, Caroline**
      **4054 Basel (CH)**

    • **Affolter, Roland**
      **5103 Möriken (CH)**
    • **Thilla, Tim**
      **79576 Weil am Rhein (DE)**
    • **Gross, Silvia**
      **35137 Padua (IT)**
    • **Turioni, Chiara**
      **35135 Padua (IT)**

(74) Vertreter: **Hepp Wenger Ryffel AG**
    **Friedtalweg 5**
    **9500 Wil (CH)**

(54) **VERFAHREN ZUR HERSTELLUNG EINER KOMPOSTIERBARE GETRÄNKEKAPSEL**

(57)     Die Erfindung betrifft ein Verfahren zur Herstellung einer Kapsel mit einer Beschichtung, zur Zubereitung eines Getränks durch Einbringen von Wasser. Das Verfahren umfasst die Schritte:

(i) Bereitstellen eines Presslings aus einem Getränkepulver oder einem Getränkepulvergemisch, wobei der Pressling eine Oberfläche aufweist, die beschichtet oder unbeschichtet ist;

(ii) in Kontakt bringen wenigstens eines Teils der Oberfläche, vorzugsweise der gesamten Oberfläche, des Presslings mit mindestens einem Polysaccharid, mindestens einem Vernetzungsmittel und mindestens einem Polyol zur Ausbildung einer Schicht;

(iii) Trocknen der Schicht.

    Die in ii) und iii) aufgebachte Schicht wird mit einem Schwellgrad zwischen 20 % und 900%, vorzugsweise 60 % bis 850 % und ganz besonders bevorzugt zwischen 100 % und 800 % eingestellt; und/oder die Kapsel wird bei Kontakt mit Wasser um 0.3 % bis 6 %, vorzugsweise 0.5 % bis 5.5 % und ganz besonders bevorzugt 1.0 % bis 4.0 % ausgedehnt.

Fig. 5

Schwellgrad (%) in Abhängigkeit der Reifungszeit (h)

EP 4 183 257 A1

**Beschreibung**

Die vorliegende Erfindung betrifft ein Verfahren zum Herstellen einer kompostierbaren Getränkekapsel, insbesondere zur Zubereitung eines Getränks aus einem Getränkepulver durch Einbringen von Wasser, eine solche Kapsel sowie die Verwendung einer solchen Kapsel, mit den Merkmalen des Oberbegriffs der unabhängigen Ansprüche.

Die Bereitstellung eines Genussmittels wie beispielsweise Kaffee in Kapselform ist hinlänglich bekannt. Die üblicherweise als Hüllmaterialien eingesetzten Werkstoffe, wie Kunststoffe oder Aluminium (z.B. EP 0 468 079 A1), weisen aber den Nachteil auf, dass sie nur mit grossem Aufwand rezyklierbar und meist nicht kompostierbar sind.

Biologisch abbaubare Kaffeekapseln sind bekannt. DE 10 2018 201 187 B3 beschreibt eine Kapsel aus einem mit Biokunststoff compoundierten Holzmaterial. Die Problematik solcher Kapseln aus kompostierbaren Materialien liegt jedoch in deren Verarbeitung. Zwar können diese Kapseln je nach verwendetem Material in Spritzgusstechnik hergestellt werden, die Masshaltigkeit ist jedoch aufgrund des hohen Faseranteils schwierig zu gewährleisten. Insbesondere Dichtkonturen, welche die Zubereitung eines Getränkes unter hohem Druck ermöglichen, sind nur schwer mit geringen Toleranzen auszubilden.

DE 10 2014 000 187 B4 beschreibt eine weitere biologisch abbaubare Kapsel aus einem Pressling aus Kaffeepulver, der mit einer biologisch abbaubaren Schicht ummantelt ist. Dazu wird der Kaffeepressling vorzugsweise mit Flüssigzellulose aus Polysacchariden, einem polyolem Spacer und einem Vernetzer ummantelt. DE 10 2014 000 187 B4 trifft jedoch keine Aussage darüber, inwieweit die Problematik von Dichtkonturen bei einer Getränkezubereitung unter hohem Druck gelöst werden kann.

Es ist daher Aufgabe der Erfindung, die Nachteile des Standes der Technik zu überwinden. Insbesondere soll ein Verfahren zur Herstellung einer Kapsel zur Zubereitung eines Getränks zur Verfügung gestellt werden, das eine Kapsel mit einer verbesserten Abdichtung auch mit kompostierbaren Materialien bereitstellt. Es ist auch eine Aufgabe der Erfindung, Kapseln aus kompostierbaren Materialien verschiedener Grössen und Geometrien bereitzustellen.

Diese Aufgabe wird durch die in den unabhängigen Patentansprüchen definierten Verfahren und Vorrichtungen gelöst. Weitere Ausführungsformen ergeben sich aus den abhängigen Ansprüchen.

Ein erster Aspekt der Erfindung betrifft ein Verfahren zur Herstellung einer Kapsel mit einer Beschichtung, zur Zubereitung eines Getränks aus einem Getränkepulver durch Einbringen von Wasser. Das Verfahren umfasst die Schritte:

(i) Bereitstellen eines Presslings aus einem Getränkepulver oder einem Getränkepulvergemisch, wobei der Pressling eine Oberfläche aufweist, die beschichtet oder unbeschichtet ist;
(ii) in Kontakt bringen wenigstens eines Teils der Oberfläche, vorzugsweise der gesamten Oberfläche, des Presslings mit mindestens einem Polysaccharid, mindestens einem Vernetzungsmittel und mindestens einem Polyol zur Ausbildung einer Schicht;
(iii) Trocknen der Schicht.

Die in Schritt ii) und iii) aufgebrachte Schicht wird mit einem Schwellgrad zwischen 20 % und 900%, vorzugsweise 60 bis 850 % und ganz besonders bevorzugt zwischen 100 % und 800 % eingestellt; und/oder die Kapsel wird bei Kontakt mit Wasser um 0.3 bis 6 %, vorzugsweise 0.5 bis 5.5 % und ganz besonders bevorzugt 1.0 bis 4.0 % ausgedehnt; und/oder die Kapsel weist, insbesondere nach einem Umspülen mit Wasser, in einem Bruchfestigkeitstest eine maximale prozentuale Ausdehnung in einer Richtung quer zu einer Pressrichtung von wenigstens 15 %, insbesondere wenigstens 20 %, bevorzugt wenigstens 25 %, besonders bevorzugt wenigstens 30 %, auf.

Unter einem "Pressling" wird gemäss der vorliegenden Erfindung ein Kernmaterial verstanden, das unter Druck verdichtet wurde. Die Bereitstellung des Kernmaterials der Kapsel als Pressling ist vorteilhaft, wenn das Kernmaterial erfindungsgemäss durch Eintauchen, Überziehen oder Besprühen mit der erfindungsgemässen Beschichtung zumindest teilweise ummantelt wird, so dass es während des Ummantelungsvorgangs nicht zerfällt. Das Kernmaterial weist daher vorzugsweise eine bestimmte Festigkeit auf. Dies kann vorzugsweise dadurch erreicht werden, dass die Verdichtung des Kernmaterials mit einem Kompressionsdruck im Bereich von 1-100 MPa, bevorzugt 5-50 MPa, durchgeführt wird, sodass der resultierende Pressling eine Festigkeit im Bereich von 3-120 N, vorzugsweise 5-60 N aufweist.

Der zur Herstellung des Presslings anzulegende Kompressionsdruck ist abhängig von den Eigenschaften des Kernmaterials, im Fall von Kaffeepulver beispielsweise vom Mahlgrad, Röstgrad und Feuchtigkeitsgehalt des Pulvers. Insbesondere bei Kaffeepulver kann beobachtet werden, dass Pulver mit kleinerem Fett- oder Ölanteil, z.B. entkoffeiniertes Kaffeepulver, einen höheren Kompressionsdruck bedingt, um einen stabilen Pressling zu erzielen.

Die Festigkeit des Presslings wird bestimmt, indem der Pressling zwischen zwei Platten einer Druck-Zugtestmaschine (beispielsweise mit einem Kraftaufnehmer Xforce P der Firma Zwick/Roell ausgestattet) positioniert und die erforderliche Kraft zum Zerstossen des Presslings bestimmt wird. Diese Methode ist auch in der WO 2008/123775 A1, S.3 beschrieben.

Der Schwellgrad ergibt sich aus der Differenz des Nassgewichts der Beschichtung und des Trockengewichts der Beschichtung nach der Gleichung

$$SW = [(Nassgewicht - Trockengewicht)/Trockengewicht] \cdot 100\ \%$$

Der Schwellgrad wird dabei wie folgt ermittelt:

Aus mindestens einem Polysaccharid, mindestens einem Polyol, und mindestens einem Vernetzungsmittel wird ein Film hergestellt. Dieser Film wird bei 35° C und 50 % rH für 120 bis 140 h bis zur Gewichtskonstanz getrocknet, kreisrund ausgestanzt (d= 2.5cm) und anschliessend das Trockengewicht ermittelt. Im Anschluss wird der getrocknete Film für 6 Stunden in entionisiertes Wasser getaucht, trocken getupft und das Nassgewicht bestimmt.

Die Ausdehnung der Kapsel bei Kontakt mit Wasser wird wie folgt bestimmt:

Der Kapseldurchmesser im trockenen Zustand wird mittels Schieblehre bestimmt. Der exakte Messpunkt wird gekennzeichnet. Anschliessend wird die Kapsel in 90 °C heissem Wasser untergetaucht. Nach 60 Sekunden wird die Kapsel entnommen und trocken getupft. Anschliessend wird der Durchmesser an der Markierung erneut bestimmt und die prozentuale Ausdehnung ermittelt.

Die maximale prozentuale Ausdehnung der Kapsel in einem Bruchfestigkeitstest wird wie folgt ermittelt:

Für den Bruchfestigkeitstest wird die Kapsel zwischen zwei parallelen Platten einer Druck-Zugtestmaschine (beispielsweise mit einem Kraftaufnehmer Xforce P der Firma Zwick/Roell ausgestattet) positioniert. Dabei wird die Kapsel mittig auf der unteren Platte in Extraktionsrichtung, im Falle eines drehsymmetrischen Presslings, beispielsweise mit Kugel- oder Würfelform, in Pressrichtung ausgerichtet. Die Platten weisen einen Durchmesser auf, welcher wenigstens 50 % grösser ist als der maximale Kapseldurchmesser. Die parallelen Platten werden langsam zusammengefahren und ein Kraft-Weg-Diagramm aufgezeichnet. Gleichzeitig mit diesem Anriss oder Bruch ist ein Kraftabfall festzustellen. Wenn die gemessene Kraft unter die Kraftabfallschwelle von 40 % liegt, wird der Bruchfestigkeitstest beendet. Die maximale gemessene Kraft ohne Beschädigung der Hülle wird als Bruchfestigkeit ausgegeben. Bei einer mehrschichtigen Hülle wird Beschädigung oder ein Durchriss der Hülle bis auf das Kernmaterial als Beschädigung der Hülle verstanden. Gleichzeitig wird die Ausdehnung der Kapsel in einer Richtung quer zur Pressrichtung, also in Richtung parallel zu den Platten, aufgezeichnet. Das Aufzeichnen der Ausdehnung in Querrichtung wird visuell erfasst. Ein allfällig vorhandener Flansch der Kapselhülle wird bei der Erfassung der Ausdehnung nicht berücksichtigt. Die Ausdehnung wird dabei in zwei zueinander senkrecht stehenden Richtungen erfasst. Aus den beiden Messwerten wird ein Mittelwert gebildet. Die maximale Ausdehnung quer zur Pressrichtung wird bei der maximalen Kraft ohne Beschädigung, also bei der Bruchfestigkeit, bestimmt. Sollte die Kapsel bei einer Kraft von 600 N nicht beschädigt werden, wird die maximale Ausdehnung bei einer Kraft von 600 N bestimmt.

Je nach Ausgestaltung der Hülle kann deren Verformbarkeit durch Benetzen oder Umspülen mit Wasser beeinflusst werden. Beispielsweise kann die Kapsel vor der Durchführung des Bruchfestigkeitstests in einem Wasserbad mit einer Temperatur von 75 °C für 5 s eingetaucht und unter Wasser gehalten werden. Das Wasser ist dabei drucklos. Die Kapsel befindet sich nach einem solchen Benetzten oder Umspülen in einem nassen Zustand.

Durch eine solche Verformbarkeit wird sichergestellt, dass sich die Kapsel bei einer von der Brühkammer abweichenden Form beim Verschliessen der Brühkammer oder beim Einleiten einer Brühflüssigkeit, üblicherweise heissem Wasser, der Form der Brühkammer anpassen kann. Es kann gewährleistet werden, dass die Kapsel dicht an den Wänden der Brühkammer anliegt und die gesamte Menge der Brühflüssigkeit durch die Kapsel hindurch geleitet werden kann. Eine mangelhafte Qualität des zubereiteten Getränks durch eine Leckage entlang der Aussenseite der Kapsel kann verhindert werden.

Bei dem Getränkepulver handelt es sich vorzugsweise um Kaffeepulver, Tee oder Milchpulver. Das Getränkepulvergemisch kann eine Kaffeemischung, Kaffeeersatzmischung, Teemischung, Trinkschokolade, Kakaomischungen, Milchkaffeemischung, Milchpulver, Fruchtmilchpulver, vegane Milchersatzpulver, Instantkaffee, Kaffee-Ersatz-Produkte und Trockensuppe, und Kombinationen davon sein.

Das in Kontaktbringen in Schritt ii) erfolgt vorzugsweise durch Aufsprühen einer Polysaccharid-, Vernetzer- und Polyollösung, entweder werden die separaten Lösungen nacheinander aufgesprüht oder das mindestens eine Polysaccharid, das mindestens eine Vernetzungsmittel und das mindestens eine Polyol werden gemischt und als Lösungsgemisch aufgesprüht. Es ist aber auch möglich, dass der Kontakt mit der Oberfläche des Presslings durch Eintauchen des Presslings in separate Lösungen des Polysaccharids, des Vernetzungsmittels und des Polyols oder durch Eintauchen in ein Gemisch dieser Verbindungen erfolgt. Auch ein Überziehen mit dem mindestens einem Polysaccharid, mindestens einem Vernetzungsmittel und mindestens einem Polyol oder einem Gemisch dieser Verbindungen ist ebenfalls möglich.

Das Trocknen in Schritt iii) kann bei Raumtemperatur oder erhöhter Temperatur erfolgen, besonders bevorzugt ist eine Trocknung bei 35°C und 50 % rH für 120 - 140 h und eine anschliessende Wärmebehandlung, nachfolgend auch Reifung genannt.

Die Trocknung in Schritt iii) könnte alternativ auch mittels Trockenmittel, beispielsweise Kieselgel erfolgen.

Aber auch andere hykroskopische Trockenmittel sind denkbar.

Besonders bevorzugt erfolgt die Einstellung des Schwellgrads der aufgebrachten Schicht durch Wärmebehandlung bzw. Reifung bei 7 % rH mit einer Temperatur unter 100 °C, vorzugsweise im Bereich von 25 bis 100 °C, besonders bevorzugt 35 bis 80 °C und ganz besonders bevorzugt 50 bis 70 °C. Die Reifung kann zwischen 0.5 und 24 Stunden, vorzugsweise 1 und 16 Stunden betragen und besonders bevorzugt zwischen 3 bis 9 Stunden erfolgen.

Eine Wärmebehandlung bei tieferen Temperaturen ist wirtschaftlich vorteilhaft und reduziert den Energieverbrauch eines solchen Herstellungsverfahrens.

Es wurde überraschend gefunden, dass der Schwellgrad der aufgebrachten Schicht einstellbar ist und mit zunehmender Reifungszeit abnimmt.

Durch den einstellbaren Schwellgrad können die Kapseln so gestaltet werden, dass sie problemlos in gängige Getränkezubereitungsmaschinen eingelegt werden können und die Beschichtung durch Kontakt mit Wasser schwillt, so dass somit Dichtekonturen innerhalb der Maschine erzeugt werden können. Dies verhindert, dass das Wasser die Maschine seitlich der Kapsel passiert, ohne das Getränkepulver zu benetzen und somit die Qualität des Getränks negativ beeinträchtigt wird. Diese Dichtekonturen halten insbesondere dem für die Zubereitung des Getränks erforderlichen Druck stand.

Auch eine Ausdehnung der beschichteten Kapsel ermöglicht eine Verformbarkeit, die eine Abdichtung innerhalb einer von der Kapselform abweichenden Brühkammer erlaubt und verhindert, dass die Qualität des Getränks negativ beeinträchtigt wird.

Die Vernetzung des Polysaccharids kann ionisch und/oder koordinativ oder kovalent erfolgen. Die Vernetzung gewährleistet die Herstellung einer Beschichtung, die den Pressling einerseits stabilisiert, um ihn transportfähig zu machen und anderseits nach in Kontakt bringen mit Wasser elastisch genug macht, um perforiert und von Wasser durchströmt zu werden, sowie eine Verformung des beschichteten Presslings zuzulassen. Das Herstellungsverfahren bietet die Möglichkeit, Stabilität und Elastizität derart zu justieren, dass Rissschäden während der Extraktion vermieden werden können. Zudem wird eine aromadichte Beschichtung erzeugt, die Aromastoffe des Presslings, beispielsweise des Kaffees, konserviert und somit auch bei längerer Lagerung die Herstellung eines Getränks mit guter sensorischer Qualität ermöglicht.

Die Beschichtung ist vorzugsweise wasserunlöslich, so dass der Pressling auch bei längerer Kontaktzeit mit heissem Wasser nicht in sich zerfällt.

Vorzugsweise ist das Polyol nach Schritt iii) mit dem mindestens einem Polysaccharid vernetzt und/oder in die Beschichtung eingelagert.

Unter Einlagern wird dabei eine nicht-kovalente Einbindung in das Netzwerk verstanden. Beispielsweise kann das Einlagern aufgrund von elektrostatischen Wechselwirkungen zustande kommen.

Durch das Polyol lassen sich die mechanischen Eigenschaften der Beschichtung hinsichtlich der Elastizität einstellen.

Die Schritte (ii) und (iii) können mehrfach wiederholt werden, vorzugsweise 2- bis 50-mal, besonders bevorzugt 2- bis 20-mal, ganz besonders bevorzugt 2- bis 10-mal und höchst bevorzugt 2-bis 5-mal.

Durch die Wiederholung der Schritte lässt sich eine Beschichtung aus mehreren Schichten herstellen. Dies wiederum ermöglicht es, die Dicke der Beschichtung nach Bedarf einzustellen.

Wenigstens ein Teil der Oberfläche des Presslings kann zusätzlich mit mindestens einem Polysaccharid und mindestens einem Vernetzungsmittel ohne Polyol in Kontakt gebracht werden. Vorzugsweise erfolgt auch danach ein Trocknungsschritt.

Somit lässt sich eine Beschichtung aus Schichten mit Polyol und ohne Polyol erzeugen, womit sich die Eigenschaften der Beschichtung weiter auf die entsprechenden Bedürfnisse einstellen lassen.

Vorzugsweise ist die Beschichtung aus zwei bis fünfzig Schichten, bevorzugt zwei bis zwanzig Schichten, ganz besonders bevorzugt zwei bis zehn Schichten und höchst bevorzugt zwei bis fünf Schichten hergestellt.

Die Beschichtung kann mindestens eine Schicht mit Polyol und mindestens eine Schicht ohne Polyol aufweisen.

Die Schichtdicke der Beschichtung ist über die Anzahl Schichten optimal einstellbar und Stabilität und Elastizität bzw. Flexibilität können an den Verwendungszweck angepasst werden.

Der Pressling kann beispielsweise zunächst mit einer oder mehreren Schichten aus mindestens einem Polysaccharid und mindestens einem Vernetzungsmittel ohne Polyol beschichtet werden und anschliessend mit einer oder mehreren Schichten mit mindestens einem Polysaccharid, mindestens einem Vernetzungsmittel und mindestens einem Polyol beschichtet werden, oder umgekehrt.

Als besonders vorteilhaft hat sich eine Beschichtung aus zunächst zwei Schichten mit Polyol und einer äusseren Schicht ohne Polyol erwiesen. Ganz besonders bevorzugt ist eine Beschichtung aus einer Schicht mit Polyol und einer äusseren Schicht ohne Polyol.

Beispielsweise kann der Presslings nach Schritt iii) zusätzlich mit mindestens einem weiteren Polysaccharid und mindestens einer Cellulose oder einem Cellulosederivat in Kontakt gebracht werden.

Vorzugsweise weisen die einzelnen Schichten der Beschichtung Dicken zwischen 30 und 600 $\mu$m, bevorzugt

zwischen 50 und 300 μm und ganz besonders bevorzugt zwischen 50 und 200 μm auf.

Vorzugsweise ist das mindestens eine Polysaccharid der Beschichtung ausgewählt aus der Gruppe umfassend Alginate, Stärke, Stärkederivate, Carageenanen, Cellulose, Cellulosederivate, Chitin, Chitosan, Pektinen, Guar, Xanthan, Johannisbrotkerngummi, Gummi arabicum, Pullulan und Agar; und Kombinationen davon. Bevorzugt sind es Polysaccharide, die eine gute Lebensmittelverträglichkeit aufweisen.

Derartige Polysaccharide sind zum einen gut zugänglich, in der Regel natürlichen Ursprungs und somit nachhaltig und lassen sich auch gut biologisch abbauen.

Insbesondere bevorzugt ist ein Alginat, beispielsweise Alkalimetallalginat, insbesondere Natriumalginat.

Natriumalginat ist ein Lebensmittelzusatzstoff und ist unter der europäischen Zulassungsnummer E 401 für Lebensmittelzusatzstoffe zugelassen. Es ist daher für die Herstellung einer Getränkekapsel in Hinblick auf die Lebensmittelverträglichkeit besonders gut geeignet.

Das mindestens eine Vernetzungsmittel kann ausgewählt sein aus Verbindungen mit einer oder mehrere Carbonyl- und/oder Carboxylfunktion, insbesondere Dialdehyde, Diketoverbindungen und Di-, Tri- oder Tetracarbonsäuren; und Kombinationen davon. Bei den Diketoverbindungen kann es sich um 1,2-Diketone handeln, bevorzugt 2,3-Butandion, 2,3-Pentandion und 2,3-Hexandion. Die Verwendung von Aceton ist jedoch weniger gut geeignet.

Die Diketoverbindungen weisen vorzugsweise die Formel $C_xH_yO_2$ auf mit x = 4-6 und y = 6 bis 10. Die Di- und Tricarbonsäuren haben bevorzugt die allgemeine Formel $C_xH_yO_z$ und weisen vorzugswiese eine Kettenlänge von mindestens vier Kohlenstoffatomen und maximal 6 Kohlenstoffatome auf. Besonders bevorzugt sind also Verbindungen, in denen x = 4 - 6, y = 4-10 und z = 4-7.

Das mindestens eine Vernetzungsmittel ist insbesondere ausgewählt aus der Gruppe bestehend aus Zitronensäure, Fumarsäure, Maleinsäure, Äpfelsäure, Weinsäure und Adipinsäure; und Kombinationen davon. Diese Vernetzungsmittel sind als Lebensmittelzusatzstoffe (E-Nummern) eingetragen und daher besonders für den Gebrauch in der Lebensmitteltechnologie geeignet und gesundheitlich unbedenklich.

Das mindestens eine Vernetzungsmittel kann auch ein Salz eines zwei- oder höherwertigen Kations sein, insbesondere eines Erdalkalimetallkations und ganz besonders bevorzugt $CaCl_2$ ist. Hier erfolgt die Vernetzung bevorzugt über ionische bzw. koordinative Bindungen. Derartige über ionische und/oder koordinative Bindungen vernetzte Polysaccharide lassen sich besonders leicht herstellen und beeinträchtigen nicht die biologische Abbaubarkeit des verwendeten Polysaccharids. Die ionisch und/oder koordinative Vernetzung kann beispielsweise mittels Polysacchariden erreicht werden, welche anionische Gruppen, wie Carboxylatgruppen oder Sulfonatgruppen, aufweisen.

Es ist auch möglich verschiedene Vernetzungsmittel zu wählen, beispielsweise kovalent und/oder koordinativ/ionisch bindende Vernetzungsmittel.

Vorteilhafterweise ist das mindestens eine Polyol ausgewählt aus der Gruppe bestehend aus aliphatische Polyole, bevorzugt Ethylenglykol, Propandiol, Butylenglykol, Triethylenglykol, Polyethylenglykol, Polypropylenglykol, Sorbitol, Erythrit, Xylit und ganz besonders bevorzugt Glycerol; cyclische Polyole, bevorzugt Glukose, Fruktose, Mannose, Galaktose, Oligofruktose, Inulin, Isomaltulose, Trehalose; Zuckeraustauschstoffe, bevorzugt Mannit, Isomalt, Maltit, Lactit; und aromatische Polyole, bevorzugt Cyanidin, Corilagin, Digallinsäure, Tanninsäure und Gallussäure; und Kombinationen davon.

Vorzugsweise beträgt die Kettenlänge des Polyols zwischen 2 und 20 Kohlenstoffatome, vorzugsweise 2 und 10 C-Atome und besonders bevorzugt 3 und 6 C-Atomen. Die Kohlenstoffketten können linear oder verzweigt sein und durch Heteroatome, insbesondere Sauerstoff, getrennt sein. Vorzugsweise weist das Polyol zwischen 2 und 10, bevorzugt 3 und 6, freie Hydroxyl (OH)-Gruppen auf.

Das mindestens eine Polysaccharid kann ein Alginat umfassen, das mindestens eine Polyol kann Glycerol umfassen und das mindestens eine Vernetzungsmittel kann Zitronensäure umfassen. Diese Kombination gibt eine besonders einfach zu handhabende Beschichtung, die zusätzlich die Anforderungen an die Lebensmittelverträglichkeit und biologische Abbaubarkeit erfüllt.

Weitere besonders bevorzugte Kombinationen, welche die Anforderungen der Lebensmittelverträglichkeit erfüllen, sind nachfolgend genannt.

Das mindestens eine Polysaccharid kann ein Alginat umfassen, das mindestens eine Polyol kann Glycerol umfassen und das mindestens eine Vernetzungsmittel kann Weinsäure umfassen.

Das mindestens eine Polysaccharid kann ein Alginat umfassen, das mindestens eine Polyol kann Sorbitol umfassen und das mindestens eine Vernetzungsmittel kann Zitronensäure umfassen.

Das mindestens eine Polysaccharid kann ein Alginat umfassen, das mindestens eine Polyol kann Sorbitol umfassen und das mindestens eine Vernetzungsmittel kann Calciumchlorid umfassen.

Das mindestens eine Polysaccharid wird vorzugsweise in einer wässrigen Lösung bereitgestellt mit einer Konzentration von 1.0 bis 5.0 % (w/v) bevorzugt 1.0 bis 3.0 % (w/v) und besonders bevorzugt 1.0 bis 1.7 % (w/v).

Im Falle eines kovalent vernetzenden Vernetzungsmittels kann das mindestens eine Vernetzungsmittel in einer wässrigen Lösung bereitgestellt werden mit einer Konzentration von 5 bis 30 % (w/v), bevorzugt 10 bis 25 % (w/v) und ganz besonders bevorzugt 15 bis 20 % (w/v).

Im Falle eines ionisch und/oder koordinativ vernetzenden Vernetzungsmittels kann das Vernetzungsmittel in einer wässrigen Lösung mit einer Konzentration von 2 bis 10 (w/v), bevorzugt 3 bis 7 % (w/v) und besonders bevorzugt 5 % (w/v) bereitgestellt werden.

Das mindestens eine Polyol wird vorzugsweise in einer wässrigen Lösung bereitgestellt mit einer Konzentration von 0.5 bis 15 % (w/v), bevorzugt 0.75 bis 12.5 % (w/v) und besonders bevorzugt 0.75 bis 10% (w/v).

Diese Konzentrationsbereiche haben den Vorteil, dass die Lösungen gut auf den Pressling aufgebracht werden können. Insbesondere beim Aufsprühen sollten die Lösungen nicht zu konzentriert sein, um ein Verstopfen der Düse zu verhindern. Gleichzeitig müssen die Lösungen aber konzentriert genug sein, um eine Vernetzung und/oder eine Einlagerung der einzelnen Bestandteile der Beschichtung zu ermöglichen.

Es ist besonders bevorzugt, dass das mindestens eine Polysaccharid und das mindestens eine Vernetzungsmittel vor dem in Kontakt bringen mit der Oberfläche des Presslings in Schritt (ii) gemischt werden. So lässt sich das Verfahren besonders wirtschaftlich gestalten.

Es ist weiterhin bevorzugt, das mindestens eine Polysaccharid, das mindestens eine Polyol und das mindestens eine Vernetzungsmittel vor dem in Kontakt bringen mit der Oberfläche des Presslings in Schritt (ii) zu mischen, um so eine wirtschaftliche Arbeitsweise zu ermöglichen.

Es ist auch möglich die Oberfläche des Presslings in Schritt ii) in aufeinander folgenden Schritten mit dem mindestens einen Polysaccharid, dem mindestens einen Polyol und dem mindestens einen Vernetzungsmittel in Kontakt zu bringen.

Aufeinanderfolgende Schritte haben den Vorteil, dass sich die einzelnen Komponenten ohne Aufwand austauschen lassen.

Alternativ ist es möglich, das mindestens eine Polysaccharid und das mindestens eine Polyol vor dem in Kontakt bringen mit der Oberfläche des Presslings in Schritt ii) zu mischen und den Pressling nach dem im Kontakt bringen mit der Mischung in eine Lösung enthaltend das mindestens eine Vernetzungsmittel zu tauchen.

Vorzugsweise liegen in Schritt ii) das mindestens eine Polysaccharid und das mindestens eine Polyol in gleichen Gewichtverhältnissen und das mindestens eine Vernetzungsmittel im zehnfachen Gewichtsverhältnis in einer vorzugsweise wässrigen Lösung vor, insbesondere 1.5 %(w/v) : 1.5 % (w/v) : 15 % (w/v).

Besonders bevorzugt ist dabei das Vorliegen in gemeinsamer Lösung. Es ist aber auch möglich, wie oben beschrieben, separate Lösungen bereitzustellen.

Alternativ liegen in Schritt ii) das mindestens eine Polysaccharid, das mindestens eine Polyol und das mindestens eine Vernetzungsmittel im Gewichtsverhältnis 1.5 % (w/v) : 10 % (w/v) : 5 % (w/v) vor.

Zusätzlich können in der Beschichtung Fasern eingebracht werden, beispielsweise Cellulosefasern. Die Fasern können in einer Schicht oder mehreren Schichten vorliegen. Vorzugswiese werden die Cellulosefasern in Schritt (ii) eingebracht, beispielsweise durch Beifügen zu einer oder mehreren der Lösungen. Es ist auch möglich, die Cellulosefasern in einer separaten Suspension bereitzustellen und den Pressling mit dieser Suspension in Kontakt zu bringen.

Als Cellulosefasern können beispielsweise VITACEL® Powdered Cellulose LC 200 verwendet werden. VITACEL® ist gereinigte, mechanisch gemahlene Cellulose, die durch Verarbeitung von Alpha-Cellulose hergestellt wird, die direkt aus natürlichen Pflanzen gewonnen wird. Der Pressling kann hierbei beispielsweise in ein Alginat-Polyol- Cellulose-Gemisch getaucht werden und für die Gelierung anschliessend in ein Calciumchlorid-Bad. Die Cellulosefaser LC 200 wird dabei in einer Konzentration zwischen 0.2-2% (w/v), bevorzugt 0.5-1.5% (w/v), besonders bevorzugt 0.5-1% (w/v) verwendet.

Es ist auch möglich mikrokristalline Cellulose (MCG) zu verwenden. Hierfür eignet sich beispielsweise VIVAPUR MCG 611 FS. Der Pressling kann hierbei beispielsweise in ein Alginat-Polyol-MCG-Gemisch getaucht werden und für die Gelierung anschliessend in ein Calciumchlorid-Bad. Die mikrokristalline Faser MCG wird dabei in einer Konzentration zwischen 0.1-5%, bevorzugt 0.5-2.0%, besonders bevorzugt 0.75-1.5% verwendet.

Es ist aber auch möglich Ethylcellulose zu verwenden. Hierfür eignet sich beispielsweise ETHOCEL™ Standard 100 Premium. Hierzu kann beispielsweise Ethanol auf rund 75° c erhitzt werden und Ethylcellulose darin gelöst werden. Der Pressling kann dann in ein Ethylcellulose-Ethanol-Gemisch getaucht und auf ein Papier abgerollt werden, so dass eine erste Schicht auf dem Pressling angeordnet ist, gefolgt von mindestens einer weiteren Alginatumfassenden Schicht, herstellbar wie vorhergehend beschrieben. Die Ethylcellulose wird dabei in einer Konzentration zwischen 1 - 30% (w/v), bevorzugt 2-20% (w/v), besonders bevorzugt 3-10% (w/v) verwendet.

Durch die Cellulosefaser wird den einzelnen Schichten zusätzliche Stabilität verliehen.

Ethylcellulose fungiert besonders bevorzugt als Imprägnierschicht, um eine Feuchtigkeitsaufnahme in den Pressling während des Beschichtens zu verhindern.

Es wurde überraschend gefunden, dass Ethylcellulose den Transport von Feuchtigkeit über die Schicht(en) zum Pressling unabhängig von der Zusammensetzung der Schichten verhindert. Ethylcellulose eignet sich somit als Feuchtigkeitsbarriere-bildende Schicht für jegliche Art von Getränkepulver enthaltende Getränkekapseln, insbesondere für Kapseln deren Beschichtung aus einer wässrigen Lösung hervorgegangen ist.

Ein zweiter Aspekt der Erfindung betrifft eine Kapsel zur Zubereitung eines Getränkepulvers durch Einbringen von Wasser, erhältlich durch ein Verfahren wie vorhergehend beschrieben.

Die Erfindung betrifft auch eine Kapsel zur Zubereitung eines Getränkepulvers durch Einbringen von Wasser, vorzugsweis eine Kapsel wie vorhergehend beschrieben. Die Kapsel weist eine Beschichtung aus mindestens einer Schicht auf. Die mindestens eine Schicht weist einen Schwellgrad zwischen 20 % und 900%, vorzugsweise 60 bis 850 % und ganz besonders bevorzugt zwischen 100 % und 800 % auf; und/oder die Kapsel dehnt sich bei Kontakt mit Wasser um 0.3 bis 6.0 %, vorzugsweise 0.5 bis 5.5 % und ganz besonders bevorzugt 1.0 bis 4.0 % aus; und/oder die Kapsel weist, insbesondere nach einem Umspülen mit Wasser, in einem Bruchfestigkeitstest eine maximale prozentuale Ausdehnung in einer Richtung quer zu einer Pressrichtung von wenigstens 15 %, insbesondere wenigstens 20 %, bevorzugt wenigstens 25 %, besonders bevorzugt wenigstens 30 %, auf.

Die Beschichtung der Kapsel kann zwischen zwei und fünfzig Schichten, bevorzugt zwischen zwei und zwanzig Schichten, ganz besonders bevorzugt zwischen zwei und zehn Schichten und höchst bevorzugt zwischen zwei und fünf Schichten aufweisen. Die Dicke der Beschichtung ist über die Anzahl Schichten optimal einstellbar und Stabilität und Elastizität bzw. Flexibilität können an den Verwendungszweck angepasst werden.

Vorzugsweise weisen die einzelnen Schichten der Beschichtung Dicken zwischen 30 und 600 $\mu$m, bevorzugt zwischen 50 und 300 $\mu$m und ganz besonders bevorzugt zwischen 50 und 200 $\mu$m auf. Die Schichtdicke bezieht sich auf die Schichtdicke im trockenen Zustand.

Die Kapsel kann, insbesondere nach einem Umspülen mit Wasser, eine maximale Kraft im Bruchfestigkeitstest, wie vorrangig beschrieben, von wenigstens 25 N, insbesondere wenigstens 50 N, bevorzugt wenigstens 100 N, aufnehmen.

Mit einer maximalen Kraft von 25 N oder mehr kann gewährleistet werden, dass die Kapsel in einer Brühkammer dicht eingeschlossen und deformiert werden kann, ohne dass sie beschädigt wird. Selbst wenn die Kapsel, beispielsweise in einer Richtung, ein Übermass gegenüber der Brühkammer aufweist, kann die Kapsel ohne Beschädigung der Hülle dicht zwischen zwei Brühkammerhälften eingeschlossen werden, so dass ein Getränk zubereitet werden kann. Sollte das Kernmaterial in Form eines Presslings vorliegen, kann dieser somit ohne Beschädigung der Hülle verformt und das Kernmaterial aufgebrochen werden. Es wird eine optimale Extraktion gewährleistet.

Vorteilhafterweise kann die Kapsel in trockenem Zustand eine maximale Kraft in einem Bruchfestigkeitstest von wenigstens 10 N, insbesondere wenigstens 15 N, bevorzugt wenigstens 20 N, aufnehmen.

Unter "trocken" oder "in trockenem Zustand" wird verstanden, dass die Kapsel noch nicht mit Wasser oder anderen Flüssigkeiten in Berührung gekommen ist, soweit nicht abweichend definiert. In diesem Zustand wird die Kapsel ausgeliefert und vom Benutzer in eine Getränkezubereitungsmaschine eingesetzt.

Eine maximale Kraft von wenigstens 10 N bei Kapseln im trockenen Zustand stellt sicher, dass die Kapsel von einem Benutzer ohne spezielle Vorsichtsmassnahmen ergriffen und einer Getränkezubereitungsmaschine zugeführt werden kann, ohne dass die Kapsel zerbricht. Das Verpacken und der Transport der Kapsel in einem üblichen Rahmen, d.h. ohne spezielle Vorsichtsmassnahmen, sind möglich.

Die Kapsel kann in nassem Zustand einen Berstdruck von weniger als 5 bar aufweisen. Dies ist vorteilhaft, da sich damit die Kapsel bei der Kompostierung einfacher auflösen kann. Die Hülle wird schon bei relativ geringer Beanspruchung aufreissen, so dass die Kompostierung begünstigt wird.

Unter dem Berstdruck wird der Innendruck verstanden, welcher benötigt wird, um die Hülle der Kapsel aufplatzen zu lassen. Zur Bestimmung des Berstdrucks wird die Kapsel für 180 min in Wasser bei einer initialen Temperatur von 75 °C eingetaucht. Das Wasser sinkt während der Eintauchzeit auf Raumtemperatur ab. Dabei ist zu beachten, dass die Kapsel komplett mit Wasser überdeckt ist. Nötigenfalls muss diese unter Wasser gehalten werden.

Wenn das Kernmaterial der Kapsel ein Pressling ist, muss dieser aufgelockert werden. Hierzu wird die Kapsel nach dem Eintauchen in Wasser einer Stauchbehandlung unterzogen. Die Kapsel wird in alle drei Dimensionen um jeweils 5 mm gestaucht bei einer Geschwindigkeit von 50 mm/min. Die Kapsel wird um 45° gedreht und nochmals in alle drei Dimensionen um 5mm gestaucht. Im Anschluss wird die Kapsel bei Raumtemperatur für weitere 120 min in Wasser bei Raumtemperatur getaucht. Die Hülle darf bei der Stauchbehandlung nicht beschädigt werden. Wenn der Pressling nicht aufgelockert wird, besteht die Gefahr, dass der Berstdruck nicht korrekt bestimmt werden kann, da der Druck im Pressling nicht an die Hülle weitergegeben werden kann.

Zur Bestimmung des Berstdrucks wird die Kapsel zwischen zwei horizontalen parallelen Platten eingelegt, wobei die obere Platte mit einer Injektionsnadel versehen ist. Die Platten üben keinen Druck auf die Kapsel aus, lediglich die Injektionsnadel penetriert die Hülle der Kapsel. Die Nadelspitze bzw. die Injektionsöffnung der Nadel steht wenigstens um 0.5 mm weiter als die Dicke der nassen Kapselhülle von der oberen Platte vor. Durch die Injektionsnadel wird Wasser mit Raumtemperatur in die Kapsel eingeführt, wobei der Wasserdruck kontinuierlich ansteigt und überwacht wird. Der Wasserdruck wird solange erhöht, bis die Hülle der Kapsel aufreisst oder platzt. Der für das Aufreissen oder Platzen benötigte Druck ist der Berstdruck.

Die maximale Kapsel-Volumenzunahme beim Befüllen der Kapsel mit Wasser, wie beschrieben, mit einem Druck von maximal 18 bar kann ohne Beschädigung der Hülle wenigstens 15 %, insbesondere wenigstens 20 %, bevorzugt wenigstens 25 %, besonders bevorzugt wenigstens 30 % betragen, bezogen auf das Anfangsvolumen.

Die Beschichtung kann eine oberflächenbereinigte Oxygen Transmission Rate (OTR) in der Einheit $cm^3$ pro $m^2$ pro Tag pro 0.21 bar von weniger als 50, vorzugsweise weniger als 20, bevorzugt weniger als 10, besonders bevorzugt weniger als 5, aufweisen. Die OTR gibt an, welche Menge an Sauerstoff pro Flächen- und Zeiteinheit durch die Hülle diffundiert. Mit solchen OTR-Werten kann gewährleistet werden, dass die Frische der Kapseln nach dem Öffnen einer Verpackung für wenigstens drei Monaten garantiert ist. Der Konsument kann somit die Kapseln über eine gewisse Zeit ohne Qualitätsverlust mit geöffneter Verpackung lagern.

Vorzugsweise ist die komplette Kapsel heimkompostierbar gemäss den Zertifizierungsprogrammen NF T 51-800 und/oder AS 5810. Unter "heimkompostierbar" wird dabei verstanden, dass das Material gemäss den Zertifizierungsprogrammen NF T 51-800:2015-11-14 (Plastics - Specifications for plastics suitable for home composting) und/oder AS 5810:2010 (Biodegradable plastics - Biodegradable plastics suitable for home composting) zumindest heimkompostierbar ist. Dies bedeutet eine Zersetzung (biodegradation) von mindestens 90% des Materials unter Freisetzung von $CO_2$ innerhalb von 12 Monaten bei einer Temperatur von $25\pm5$ °C sowie eine Fragmentierung (Desintegration) von mindestens 90% des Materials innerhalb von 6 Monaten bei einer Temperatur von $25\pm5$ °C. Die Kapsel kann somit nach dem Gebrauch der Kompostierung übergeben werden. Es ist keine separate Entsorgung nötig.

Die Kapsel kann eine runde, insbesondere kugelrunde, Form aufweisen. Ebenso ist aber auch denkbar, dass die Form der Kapsel anderen geometrischen Körpern im Wesentlichen entspricht, wie beispielsweise einem Würfel, Quader, Prisma, Pyramide, Zylinder, Kegelstumpf, Kegel, Torus, Ellipsoid, usw. Dabei ist zu beachten, dass allfällige Ecken und Kanten vorzugsweise nicht scharf ausgebildet sondern abgerundet sind.

Ein dritter Aspekt der Erfindung betrifft die Verwendung einer Kapsel wie vorhergehend beschrieben zum Herstellen eines Getränks. Dazu kann die Kapsel in eine Getränkezubereitungsmaschine eingelegt werden. Die Getränkezubereitungsmaschine umfasst eine Brühkammer mit einer Form und einem Brühvolumen zur Aufnahme der Kapsel. Die Brühkammer weist Penetrationsmittel zum Einstechen und Einleiten von Wasser in die Kapsel und Perforationsmittel zum Bilden eines Auslasses aus der Kapsel auf. Die Kapsel weist eine Form und ein Trockenvolumen vor dem Einleiten von Wasser in die Kapsel und ein Nassvolumen während des Einleitens von Wasser auf. Während des Einleitens von Wasser nimmt das Nassvolumen der Kapsel zu. Die Hülle der Kapsel ist derart verformbar ausgestaltet, dass die Form der Kapsel im Wesentlichen ohne Beschädigung der Hülle an die Form der Brühkammer anpassbar ist. Das maximale Nassvolumen der Kapsel während der Getränkezubereitung entspricht im Wesentlichen dem Brühvolumen der Brühkammer.

Unter dem maximalen Nassvolumen wird das maximale Volumen der in der Brühkammern eingeschlossenen Kapsel verstanden, welches die Kapsel während dem Einleiten von Wasser in die Kapsel einnimmt. Dabei wird zur Bestimmung des maximalen Nassvolumens 200 ml Wasser unter einem Druck von 6 bar mit einer Durchflussrate von 200 ml/min in die Kapsel eingeleitet.

Durch die verformbare Ausgestaltung der Hülle und die Anpassung des Volumens der Kapsel an das Kammervolumen der Brühkammer während des Einleitens von Wasser in die Kapsel kann sichergestellt werden, dass die Kapsel und die Brühkammer optimal aufeinander abgestimmt sind. So ist es beispielsweise nicht nötig, dass das Volumen der Kapsel schon vor der Benutzung der Kapsel mit demjenigen der Brühkammer übereinstimmt. Es ist sogar denkbar, dass eine Kapsel mit einem kleineren Durchmesser verwendet werden kann, welcher grösser als ein kleinster Durchmesser der Brühkammer ist. Ebenso sind mit der gleichen Brühkammer Kapseln mit unterschiedlichen Grössen verwendbar. Beispielsweise kann somit die Kapsel ohne Einhaltung von engen Toleranzen hergestellt werden, ohne dass eine Qualitätseinbusse in Kauf genommen werden muss. Die Herstellungskosten lassen sich verringern.

Die vorliegende Erfindung wird im Folgenden anhand von Beispielen näher beschrieben.

BEISPIELE

Beispiel 1

1.5 % (w/v) einer Natriumalginat-Lösung (4.05 g Natriumalginat in 270 mL entionisiertem Wasser) wurde mit 2.025 g Glycerol vermischt, so dass sich eine Konzentration von 0.75 % (w/v) Glycerol ergab. Anschliessend wurden 40.5 g einer 1 M Zitronensäurelösung schrittweise zugegeben und für 20 Minuten gerührt. Die

Mischung wurde in einen Plexiglasbehälter gegossen und bei 35 °C für 120 bis 140 h bis zur Gewichtskonstanz getrocknet. Die Proben wurden anschliessend unterschiedlich langen Reifungszeiten bei 70 °C ausgesetzt (0, 3, 5, 7 oder 9 h), kreisrund ausgestanzt (d = 2.5 cm) und gewogen.

Anschliessend wurden die Proben für 6 h in 30 mL entionisiertem Wasser getränkt, abgetupft, erneut gewogen und der Schwellgrad berechnet.

Beispiel 2

1.5 % (w/v) einer Natriumalginat-Lösung (4.05 g Natriumalginat in 270 mL entionisiertem Wasser) wurde mit 4.05 g Glycerol vermischt, so dass sich eine Konzentration von 1.5 % (w/v) Glycerol ergab. Im Anschluss wurden 40.5 g einer 1 M Zitronensäurelösung schrittweise zugegeben und für 20 Minuten gerührt. Die Mischung wurde in einen Plexiglasbehälter gegossen und bei 35 °C für 120 bis 140 h bis zur Gewichtskonstanz getrocknet. Die Proben wurden anschliessend unterschiedlich langen Reifungszeiten bei 70 °C ausgesetzt (0, 3, 5, 7 oder 9 h), kreisrund ausgestanzt (d = 2.5 cm) und gewogen.

Anschliessend wurden die Proben für 6 h in 30 mL entionisiertem Wasser getränkt, abgetupft, erneut gewogen und der Schwellgrad berechnet.

Beispiel 3

1.5 % (w/v) einer Natriumalginat-Lösung (4.05 g Natriumalginat in 270 mL entionisiertem Wasser) wurde mit 2.025 g Glycerol vermischt, so dass sich eine Konzentration von 0.75 % (w/v) Glycerol ergab. Anschliessend wurden 40.5 g einer 1 M Weinsäurelösung schrittweise zugegeben und für 20 Minuten gerührt. Die Mischung wurde in einen Plexiglasbehälter gegossen und bei 35 °C für 120 bis 140 h bis zur Gewichtskonstanz getrocknet. Die Proben wurden anschliessend unterschiedlich langen Reifungszeiten bei 70 °C ausgesetzt (0, 3, 5, 7 oder 9 h), kreisrund ausgestanzt (d = 2.5 cm) und gewogen.

Anschliessend wurden die Proben für 6 h in 30 mL entionisiertem Wasser getränkt, abgetupft, erneut gewogen und der Schwellgrad berechnet.

Beispiel 4

Beispiel 4 wurde analog Beispiel 3 ausgeführt, wobei 4.05 g Glycerol verwendet wurden, so dass sich eine 1.5 % (w/v) Glycerollösung ergab.

Beispiel 5

Beispiel 5 wurde analog dem Beispiel 1 durchgeführt. In diesem Beispiel wurden aber 2.025 g Sorbitol verwendet, so dass sich eine 0.75 % (w/v) Sorbitollösung ergab.

Beispiel 6

Beispiel 6 wurde analog zu Beispiel 5 durchgeführt. In diesem Beispiel wurde aber eine 1.5 % (w/v) Sorbitollösung verwendet.

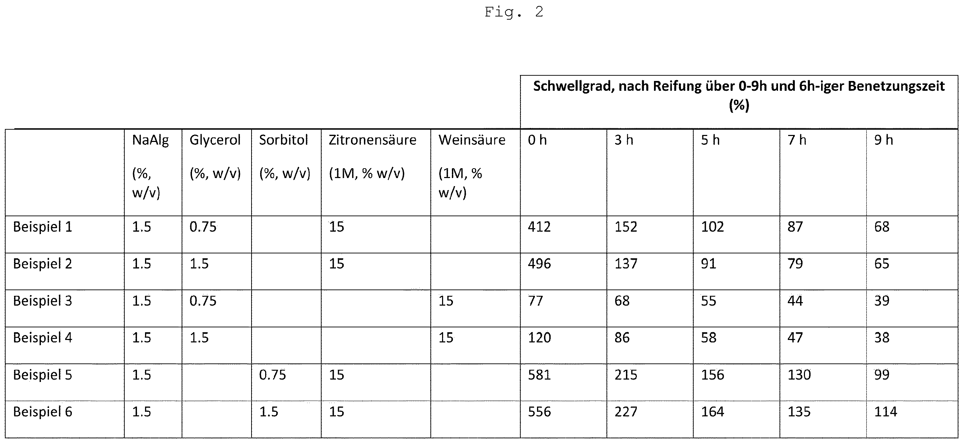

Sämtliche Beispiele sind nochmals unter Angabe der ermittelten Schwellgrade in Figur 2 zusammengestellt.

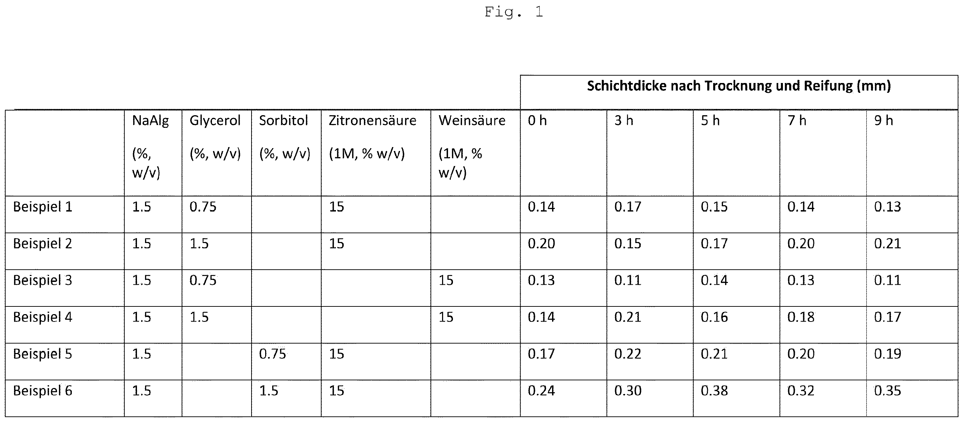

Zur Ermittlung der Schichtdicken wurden die in den Beispielen gewonnen Proben nach der Trocknungs- bzw. Reifungszeit und vor der Tränkung mit Wasser in Kreisen mit einem Kreisdurchmesser von 2.5 cm ausgestanzt und die Schichtdicken mit einem RU-PAC/IP54 digital Caliper, Auflösung 0.01 mm, gemessen. Es wurden pro Probe 10 Messungen an verschiedenen Punkten der Probe gemessen und daraus der Mittelwert ermittelt. Die so ermittelten Schichtdicken sind in Figur 1 gezeigt.

Beispiel 7

Eine Mischung aus Natriumalginat (1.5 % w/v), Cellulose (1 % w/v) und Sorbitol (10 % w/v) wurde zu Folien gegossen und anschliessend mit einer wässrigen Calciumchloridlösung (5 % w/v) vernetzt. Die Folie wurde anschliessend bei 35 °C für 120 bis 140 h bis zur Gewichtskonstanz getrocknet. Die Proben wurden anschliessend unterschiedlich langen Reifungszeiten bei 70 °C ausgesetzt (0, 9 oder 24 h), kreisrund ausgestanzt (d = 2.5 cm) und gewogen.

Anschliessend wurden die Proben für 6 h in 30 mL entionisiertem Wasser getränkt, abgetupft, erneut gewogen und der Schwellgrad berechnet.

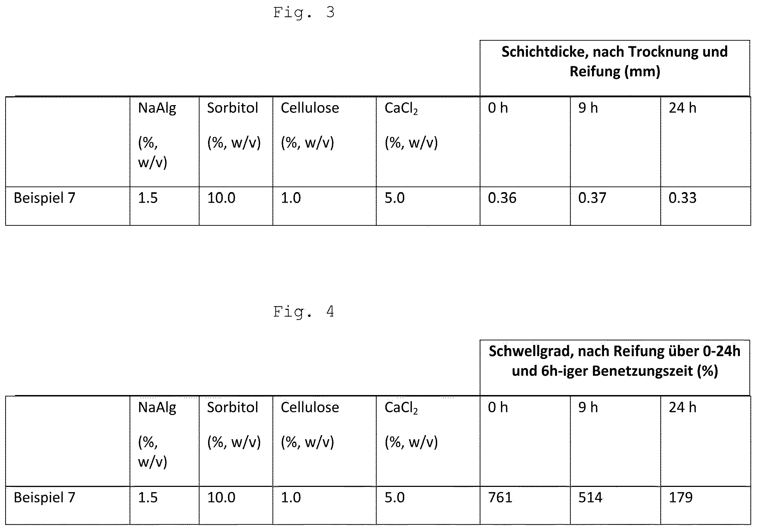

Die Ergebnisse sind nachfolgend in Figur 4 gezeigt.

Zur Ermittlung der Schichtdicken wurde die in Beispiel 7 gewonnene Probe nach der Trocknungs- bzw. Reifungszeit und vor der Tränkung in Wasser in Kreisen mit einem Kreisdurchmesser von 2.5 cm ausgestanzt und die Schichtdicken mit einem RUPAC/IP54 digital Caliper, Auflösung 0.01 mm, gemessen. Es wurden pro Probe 10 Messungen an verschiedenen Punkten der Probe gemessen und daraus der Mittelwert ermittelt. Figur 3 zeigt die so ermittelten Schichtdicken.

Beispiel 8 - Herstellung einer Kapsel

Gemäss den obigen Ausführungen wurde eine Kapsel aus einem Pressling umfassend eine Beschichtung aus drei Schichten hergestellt. Der Pressling aus 5.7 g Kaffeepulver wurde dabei zunächst in eine wässrige, 1 %ige Alginatlösung mit 10 % Sorbitolanteil getaucht und anschliessend für 5 sec in ein 5 %ige Calciumchlorid-Lösung.

Der so erhaltende Pressling wurde nach Trocknung der ersten Schicht aus Alginat, Sorbitol und Calciumionen, in eine zweite wässrige Lösung aus 1.5 % Alginat, 10 % Sorbitol und 1 % Cellulose getaucht und anschliessend im 5%igen Calciumbad erneut für 5 sec vernetzt und getrocknet.

Der so gewonnene Pressling mit zwei Schichten wurde in eine wässrige, 1.7 %ige Alginatlösung mit 1 % Cellulose getaucht, anschliessend wiederum im Calciumbad vernetzt und getrocknet.

Die so erhaltene Kapsel bestand aus drei Schichten, wobei

- die erste Schicht vernetztes Alginat und Sorbitol,
- die zweite Schicht vernetztes Alginat, Sorbitol und Cellulose, und
- die dritte Schicht vernetztes Alginat und Cellulose, aufwies.

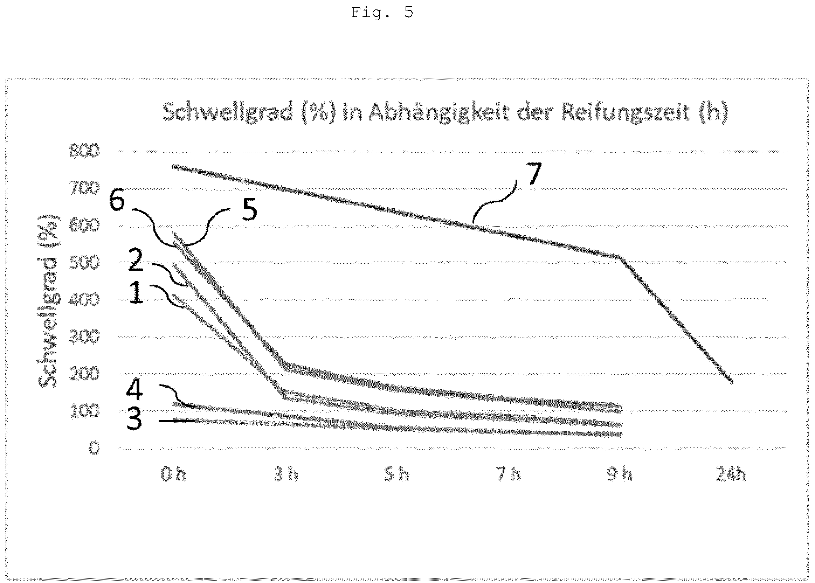

Figur 5 zeigt die Einstellung des Schwellgrads in Abhängigkeit von der Reifungszeit. Die Nummerierungen entsprechen den Beispielen. Graph 1 kennzeichnet den Verlauf für Beispiel 1, Graph 2 für Beispiel 2 etc. Es zeigte sich, dass der Schwellgrad der aufgebrachten Schicht einstellbar ist und mit zunehmender Reifungszeit abnimmt.

**Patentansprüche**

1. Verfahren zur Herstellung einer Kapsel mit einer Beschichtung, zur Zubereitung eines Getränks aus einem Getränkepulver durch Einbringen von Wasser, umfassend die Schritte:

   (i) Bereitstellen eines Presslings aus einem Getränkepulver oder einem Getränkepulvergemisch, wobei der Pressling eine Oberfläche aufweist, die beschichtet oder unbeschichtet ist;
   (ii) in Kontakt bringen wenigstens eines Teils der Oberfläche, vorzugsweise der gesamten Oberfläche, des Presslings mit mindestens einem Polysaccharid, mindestens einem Vernetzungsmittel und mindestens einem Polyol zur Ausbildung einer Schicht;
   (iii) Trocknen der Schicht;
   **dadurch gekennzeichnet, dass**

   - die in ii) und iii) aufgebrachte Schicht mit einem Schwellgrad zwischen 20 % und 900 %, vorzugsweise 60 % bis 850 % und ganz besonders bevorzugt zwischen 100 % und 800 % eingestellt wird; und/oder
   - die Kapsel bei Kontakt mit Wasser um 0.3 % bis 6 %, vorzugsweise 0.5 % bis 5.5 % und ganz besonders bevorzugt 1.0 % bis 4.0 % ausgedehnt wird.

2. Verfahren nach Anspruch 1, wobei das Polyol nach Schritt iii) mit dem mindestens einen Polysaccharid vernetzt ist und/oder in die Beschichtung eingelagert ist.

3. Verfahren nach Anspruch 1 oder 2, wobei die Einstellung des Schwellgrads durch Wärmebehandlung mit einer Temperatur unter 100 °C erfolgt, vorzugsweise im Bereich von 25 bis 100 °C, besonders bevorzugt 35 bis 80 °C und ganz besonders bevorzugt 50 bis 70 °C.

4. Verfahren nach einem der vorherigen Ansprüche, wobei die Schritte (ii) und (iii) mehrfach wiederholt werden, vorzugsweise 2- bis 50-mal, besonders bevorzugt 2- bis 20-mal, ganz besonders bevorzugt 2- bis 10-mal und höchst bevorzugt 2- bis 5-mal.

5. Verfahren nach einem der vorherigen Ansprüche, wobei der Pressling nach Schritt iii) zusätzlich mit mindestens einem weiteren Polysaccharid und mindestens einer Cellulose oder einem Cellulosederivat in Kontakt gebracht wird.

6. Verfahren nach einem der vorherigen Ansprüche, wobei das mindestens eine Polysaccharid der Beschichtung ausgewählt ist aus der Gruppe Alginate, Stärke, Stärkederivate, Carrageenanen, Cellulose, Cellulosederivate, Chitin, Chitosan, Pektinen, Guar, Xanthan, Johannisbrotkerngummi, Gummi arabicum, Pullulan, und Agar; und Kombinationen davon.

7. Verfahren nach einem der vorherigen Ansprüche, wobei das mindestens eine Polysaccharid Alginat ist und vorzugsweise als Alkalimetallalginat, insbesondere Natriumalginat, vorliegt.

8. Verfahren nach einem der vorherigen Ansprüche, wobei das mindestens eine Vernetzungsmittel ausgewählt ist aus Verbindungen mit einer oder mehreren Carbonyl- und/oder Carboxylfunktion, insbesondere Dialdehyde, Diketoverbindungen und Di-, Tri- oder Tetracarbonsäuren; und Kombinationen davon.

9. Verfahren nach Anspruch 8, wobei das mindestens eine Vernetzungsmittel ausgewählt ist aus der Gruppe bestehend aus Zitronensäure, Fumarsäure, Maleinsäure, Weinsäure, Äpfelsäure und Adipinsäure; und Kombinationen davon.

10. Verfahren nach einem der vorherigen Ansprüche, wobei das mindestens eine Vernetzungsmittel ein Salz eines zwei- oder höherwertigen Kations ist, insbesondere eines Erdalkalimetallkations und ganz besonders bevorzugt $CaCl_2$ ist.

11. Verfahren nach einem der vorherigen Ansprüche, wobei das mindestens eine Polyol ausgewählt ist aus der Gruppe bestehend aus aliphatische Polyole, bevorzugt Ethylenglykol, Propandiol, Butylenglykol, Triethylenglykol, Polyethylenglykol, Polypropylenglykol, Erythrit, Xylit und ganz besonders bevorzugt Sorbitol und Glycerol; cyclische Polyole, bevorzugt Glukose, Fruktose, Mannose, Galaktose, Oligofruktose, Inulin, Isomaltulose, Trehalose; Zuckeraustauschstoffe, bevorzugt Mannit, Isomalt, Maltit, Lactit; und aromatische Polyole, bevorzugt Cyanidin, Corilagin, Digallinsäure, Tanninsäure und Gallussäure; und Kombinationen davon.

12. Verfahren nach einem der vorherigen Ansprüche, wobei das mindestens eine Polysaccharid ein Alginat umfasst, wobei das mindestens eine Polyol Glycerol umfasst und wobei das mindestens eine Vernetzungsmittel Zitronensäure umfasst.

13. Verfahren nach einem der vorherigen Ansprüche, wobei das mindestens eine Polysaccharid ein Alginat umfasst, wobei das mindestens eine Polyol Glycerol umfasst und wobei das mindestens eine Vernetzungsmittel Weinsäure umfasst.

14. Verfahren nach einem der vorherigen Ansprüche, wobei das mindestens eine Polysaccharid ein Alginat umfasst, wobei das mindestens eine Polyol Sorbitol umfasst und wobei das mindestens eine Vernetzungsmittel Zitronensäure umfasst.

15. Verfahren nach einem der vorherigen Ansprüche, wobei das mindestens eine Polysaccharid ein Alginat umfasst, wobei das mindestens eine Polyol Sorbitol umfasst und wobei das mindestens eine Vernetzungsmittel Calciumchlorid umfasst.

16. Kapsel zur Zubereitung eines Getränks aus einem Getränkepulver oder einem Getränkepulvergemisch durch Einbringen von Wasser, erhältlich durch ein Verfahren nach einem der Ansprüche 1 bis 15.

17. Kapsel zur Zubereitung eines Getränks durch Einbringen von Wasser, vorzugsweise eine Kapsel nach Anspruch 16, **dadurch gekennzeichnet, dass** die Kapsel eine Beschichtung aus mindestens einer Schicht aufweist, wobei

- diese mindestens eine Schicht mit einem Schwellgrad zwischen 20 % und 900 %, vorzugsweise 60 % bis 850 % und ganz besonders bevorzugt zwischen 100 % und 800 % aufweist; und/oder
- die Kapsel sich bei Kontakt mit Wasser um 0.3 % bis 6.0 %, vorzugsweise 0.5 % bis 5.5 % und ganz besonders bevorzugt 1.0 % bis 4.0 % ausdehnt.

18. Kapsel nach Anspruch 16 oder 17, wobei die Beschichtung zwischen zwei und fünfzig Schichten, bevorzugt zwischen zwei und zwanzig Schichten, ganz besonders bevorzugt zwischen zwei und zehn Schichten und höchst bevorzugt zwischen zwei und fünf Schichten aufweist.

19. Kapsel nach Anspruch 18, wobei die einzelnen Schichten der Beschichtung Dicken zwischen 30 und 600 $\mu$m, bevorzugt zwischen 50 und 300 $\mu$m und ganz besonders bevorzugt zwischen 50 und 200 $\mu$m aufweisen.

20. Kapsel nach einem der Ansprüche 16 bis 19, wobei die Kapsel, insbesondere nach einem Umspülen mit Wasser, eine maximale Kraft im Bruchfestigkeitstest von wenigstens 25 N, insbesondere wenigstens 50 N, bevorzugt wenigstens 100 N, aufnimmt.

21. Verwendung einer Kapsel nach einem Anspruch 16 bis 20 zum Herstellen eines Getränks.

Fig. 1

| | NaAlg (%, w/v) | Glycerol (%, w/v) | Sorbitol (%, w/v) | Zitronensäure (1M, % w/v) | Weinsäure (1M, % w/v) | Schichtdicke nach Trocknung und Reifung (mm) | | | | |
|---|---|---|---|---|---|---|---|---|---|---|
| | | | | | | 0 h | 3 h | 5 h | 7 h | 9 h |
| Beispiel 1 | 1.5 | 0.75 | | 15 | | 0.14 | 0.17 | 0.15 | 0.14 | 0.13 |
| Beispiel 2 | 1.5 | 1.5 | | 15 | | 0.20 | 0.15 | 0.17 | 0.20 | 0.21 |
| Beispiel 3 | 1.5 | 0.75 | | | 15 | 0.13 | 0.11 | 0.14 | 0.13 | 0.11 |
| Beispiel 4 | 1.5 | 1.5 | | | 15 | 0.14 | 0.21 | 0.16 | 0.18 | 0.17 |
| Beispiel 5 | 1.5 | | 0.75 | 15 | | 0.17 | 0.22 | 0.21 | 0.20 | 0.19 |
| Beispiel 6 | 1.5 | | 1.5 | 15 | | 0.24 | 0.30 | 0.38 | 0.32 | 0.35 |

Fig. 2

| | NaAlg (%, w/v) | Glycerol (%, w/v) | Sorbitol (%, w/v) | Zitronensäure (1M, % w/v) | Weinsäure (1M, % w/v) | Schwellgrad, nach Reifung über 0-9h und 6h-iger Benetzungszeit (%) | | | | |
|---|---|---|---|---|---|---|---|---|---|---|
| | | | | | | 0 h | 3 h | 5 h | 7 h | 9 h |
| Beispiel 1 | 1.5 | 0.75 | | 15 | | 412 | 152 | 102 | 87 | 68 |
| Beispiel 2 | 1.5 | 1.5 | | 15 | | 496 | 137 | 91 | 79 | 65 |
| Beispiel 3 | 1.5 | 0.75 | | | 15 | 77 | 68 | 55 | 44 | 39 |
| Beispiel 4 | 1.5 | 1.5 | | | 15 | 120 | 86 | 58 | 47 | 38 |
| Beispiel 5 | 1.5 | | 0.75 | 15 | | 581 | 215 | 156 | 130 | 99 |
| Beispiel 6 | 1.5 | | 1.5 | 15 | | 556 | 227 | 164 | 135 | 114 |

Fig. 3

| | NaAlg (%, w/v) | Sorbitol (%, w/v) | Cellulose (%, w/v) | CaCl$_2$ (%, w/v) | Schichtdicke, nach Trocknung und Reifung (mm) | | |
|---|---|---|---|---|---|---|---|
| | | | | | 0 h | 9 h | 24 h |
| Beispiel 7 | 1.5 | 10.0 | 1.0 | 5.0 | 0.36 | 0.37 | 0.33 |

Fig. 4

| | NaAlg (%, w/v) | Sorbitol (%, w/v) | Cellulose (%, w/v) | CaCl$_2$ (%, w/v) | Schwellgrad, nach Reifung über 0-24h und 6h-iger Benetzungszeit (%) | | |
|---|---|---|---|---|---|---|---|
| | | | | | 0 h | 9 h | 24 h |
| Beispiel 7 | 1.5 | 10.0 | 1.0 | 5.0 | 761 | 514 | 179 |

Fig. 5

Schwellgrad (%) in Abhängigkeit der Reifungszeit (h)

EP 4 183 257 A1

**Europäisches Patentamt**
**European Patent Office**
**Office européen des brevets**

# EUROPÄISCHER RECHERCHENBERICHT

**Nummer der Anmeldung**

**EP 21 20 9384**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2017/167624 A1 (NICKEL AXEL [DE]) 5. Oktober 2017 (2017-10-05) * Ansprüche 1,5; Beispiel 1 * ----- | 1-21 | INV. A23F3/16 A23F3/22 A23F3/32 |
| A | US 2014/332547 A1 (FOOTZ DARREN JOSEPH [CA] ET AL) 13. November 2014 (2014-11-13) * Ansprüche 1,7; Abbildungen * ----- | 1-21 | A23F5/12 A23F5/28 A23F5/40 A23F5/42 |
| A | WO 2015/177591 A2 (BISERKON HOLDINGS LTD [CY]) 26. November 2015 (2015-11-26) * das ganze Dokument * ----- | 1-21 | A47J31/36 B65D85/804 |

**RECHERCHIERTE SACHGEBIETE (IPC)**

A23F
B65D
A47J

Der vorliegende Recherchenbericht wurde für alle Patentansprüche erstellt

| Recherchenort | Abschlußdatum der Recherche | Prüfer |
|---|---|---|
| Den Haag | 2. Mai 2022 | Diller, Reinhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 20 9384

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02−05−2022

| Im Recherchenbericht angeführtes Patentdokument | Datum der Veröffentlichung | Mitglied(er) der Patentfamilie | Datum der Veröffentlichung |
|---|---|---|---|
| WO 2017167624 A1 | 05−10−2017 | CA 3019408 A1 | 05−10−2017 |
| | | CN 109071080 A | 21−12−2018 |
| | | EP 3225566 A1 | 04−10−2017 |
| | | ES 2700209 T3 | 14−02−2019 |
| | | KR 20180126571 A | 27−11−2018 |
| | | PL 3225566 T3 | 29−03−2019 |
| | | US 2019144199 A1 | 16−05−2019 |
| | | WO 2017167624 A1 | 05−10−2017 |
| US 2014332547 A1 | 13−11−2014 | US 2014332547 A1 | 13−11−2014 |
| | | US 2014335236 A1 | 13−11−2014 |
| WO 2015177591 A2 | 26−11−2015 | AU 2014394631 A1 | 12−01−2017 |
| | | CA 2949930 A1 | 26−11−2015 |
| | | DK 3145838 T3 | 15−03−2021 |
| | | EP 3145838 A2 | 29−03−2017 |
| | | EP 3831744 A1 | 09−06−2021 |
| | | ES 2859908 T3 | 04−10−2021 |
| | | PT 3145838 T | 15−03−2021 |
| | | US 2017158422 A1 | 08−06−2017 |
| | | WO 2015177591 A2 | 26−11−2015 |

EPO FORM P0461

Für nähere Einzelheiten zu diesem Anhang : siehe Amtsblatt des Europäischen Patentamts, Nr.12/82

**EP 4 183 257 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0468079 A1
- DE 102018201187 B3
- DE 102014000187 B4
- WO 2008123775 A1